# EUROPEAN PATENT APPLICATION

(11) **EP 1 185 064 A2**
(43) Date of publication of application: **06.03.2002**
(21) Application number: 01440284.6
(22) Date of filing: 27.08.2001
(51) Int. Cl.: H04M 3/51, H04Q 3/00

(54) **Call distribution in an intelligent network to mobile operators**

(30) Priority: 28.08.2000 US 228825 P
(71) Applicant: ALCATEL, 75008 Paris (FR)
(72) Inventor: Gilman, Stevens R., Fairview, TX 75069 (US)
(74) Representative: Dreiss, Fuhlendorf, Steimle & Becker

(57) **Abstract**

A system and method for effectuating operator-assisted services in a contact center environment by using mobile agents disposed in a hybrid telecommunications network. Upon receiving a wireless mobile agent's registration request at an HLR, the mobile agent's information is forwarded to an SCP. The SCP is operable to provide the mobile agent's location information to a contact center responsible for a particular operator-assisted service. When the SCP is queried by a service switching node responsive to an incoming call, the SCP interacts with the contact center upon determining that the incoming call involves the operator-assisted service. The contact center is operable to select a mobile agent (or none at all) from a plurality of registered agents based on the agents' profile and location information, in conjunction with the call context information supplied by the SCP. Based on the selection by the contact center, the SCP transmits appropriate routing information to the service switching node for terminating the call to the mobile agent accordingly.

## Description

### BACKGROUND OF THE INVENTION

### Technical Field of the Invention

The present invention generally relates to telecommunication services. More particularly, and not by way of any limitation, the present invention is directed to a system and method for effectuating operator-assisted services in a contact center environment by using mobile agents disposed in a hybrid telecommunications network.

### Description of Related Art

Over the past decade or so, there has been an increase in the number of business transactions completed over the telephone by means of operator-assisted services, rather than face-to-face visits or putting things in writing.
This has dramatically changed the range of business activities undertaken by the enterprises today. Technologies such as modern telephony protocols, contact centers (also referred to as call centers), workflow management and document management systems, and the like help the state-of-the-art enterprise to organize its data, and ideally, recognize the customer by his telephone number, the customer ID (e.g. by allowing the customer to enter the ID in a pre-switched dialogue with an interactive service unit), or by employing other screening mechanisms.

In many businesses, such as retail banking or customer care, for instance, a typical customer now transacts more business through contact centers than traditional methods. Accordingly, efficient customer care centers, help desks, or telebanking centers provide a competitive edge for today's service-oriented entities. It has become increasingly more important that the calls be answered quickly and concisely by the most competent employees (i.e., agents) available, and in the shortest time.

Today's contact centers employ various useful features such as automatic call distribution (ACD), quality measurement and control, agent evaluation and training, automated voice recognition (AVR), interactive voice recording (IVR), et cetera, that can substantially help increase the enterprise's efficiency. A significant drawback in the current implementations of operator-assisted services, however, is that an originating wireline or wireless calling party must terminate to a wireline operator at a fixed location.

### SUMMARY OF THE INVENTION

Accordingly, the present invention provides a scheme for effectuating operator-assisted services in a contact center environment by advantageously using mobile agents (which may be wireless agents or wireline agents) disposed in a hybrid telecommunications network. Preferably, the hybrid telecommunications network may be comprised of one or more network portions such as, for example, a wireless network portion, a wireline network portion, a packet-switched network portion (involving, for instance, the Internet), et cetera. In addition, the hybrid network may be embodied as a next-generation network having the capability to transport diverse multimedia, e.g., voice, video, audio, data, graphics, and the like.

In one aspect, the present invention is directed to a service provisioning method for use in the hybrid telecommunications network. Upon receiving a mobile agent's registration request at a home location register (HLR), the mobile agent's information is forwarded to a service control point (SCP) disposed in the network. The SCP is operable to provide the mobile agent's location information to a contact center responsible for a particular operator-assisted service. When the SCP is queried by a service switching node responsive to an incoming call, the SCP interacts with the contact center upon determining that the incoming call involves an operator-assisted service. The contact center is operable to select a mobile agent (or none at all) from a plurality of registered agents based on the agents' profile and location information, in conjunction with the call context information supplied by the SCP. Thereafter, the SCP receives a message from the contact center to indicate that the incoming call is to be routed to a particular mobile agent in accordance with the selection by the contact center. In response, the SCP forwards the call-routing information pertaining to the mobile agent to the service switching node which, in turn, terminates the call to the mobile agent accordingly.

In one exemplary embodiment, the incoming call (which can be originated by a wireless subscriber or a wireline subscriber) may be initially screened by an intelligent peripheral (IP) disposed in the hybrid telecommunications network prior to routing the call to the wireless mobile agent. For example, an IVR system or a system having the capability of effectuating interactive multimedia service resource functionality (SRF) may be implemented in this regard.

Preferably, the mobile agent's profile database includes information relating to the mobile agent's language preferences and capabilities, scheduling options and restrictions, media preferences, skill levels corresponding to the particular operator-assisted service, et cetera. In a further exemplary embodiment, the determination to route the incoming call to a mobile agent may also be based on location information relating to the mobile agent, the area from which the incoming call is originated, or both.

In another aspect, the present invention is directed to a system for effectuating an operator-assisted service in a hybrid telecommunications network such as the network exemplified hereinabove. A structure associated with an HLR is operable to forward a mobile agent's information to an SCP when the mobile agent transmits a message such as a registration or authentication request. An authentication center (AC) may be included for authenticating the mobile agent pursuant to the registration process. The SCP is provided with a structure operable to forward the mobile agent's information to a contact center responsible for a particular operator-assisted service. The contact center may be comprised of a network contact center or a local contact center that is part of an enterprise network. The SCP is also provided with the capability to interact with the contact center responsive to a query by a service switching node when an incoming call pursuant to the operator-assisted service is received thereat. A logic structure associated with the contact center is operable to determine whether the incoming call is to be routed to a mobile agent supervised by the contact center. If so, the logic structure is also operable to identify an appropriate mobile agent based on location information, mobile agent's availability, preferences, scheduling options, skill level, etc. The contact center is further provided with the capability to provide a message to the SCP based on its determination that the call is to be routed to the appropriate mobile agent. The SCP is operable to provide appropriate call-routing information to the service switching node for terminating the call accordingly.

In a further aspect, the present invention is directed to a computer-accessible medium or media carrying one or more sequences of instructions which, when executed by the processing nodes associated with a telecommunications network, cause to be performed at least a portion of the various steps of the wireless contact center agent scheme summarized hereinabove.

### BRIEF DESCRIPTION OF THE DRAWINGS

A more complete understanding of the present invention may be had by reference to the following Detailed Description when taken in conjunction with the accompanying drawings wherein:
- FIG. 1: depicts an exemplary hybrid telecommunications network wherein a wireless mobile agent is employed for effectuating an operator-assisted service in a contact center environment in accordance with the teachings of the present invention;
- FIG. 2: is a flow chart of the various steps of an exemplary registration process involving a mobile agent and its supervisory contact center in accordance with the teachings of the present invention;
- FIG. 3: is a flow chart of the various steps involved in an exemplary service provisioning method using wireless mobile agents for effectuating an operator-assisted service in a hybrid telecommunications network; and
- FIGS. 4-6: are exemplary message flow diagrams for practicing the teachings of the present invention.

### DETAILED DESCRIPTION OF THE DRAWINGS

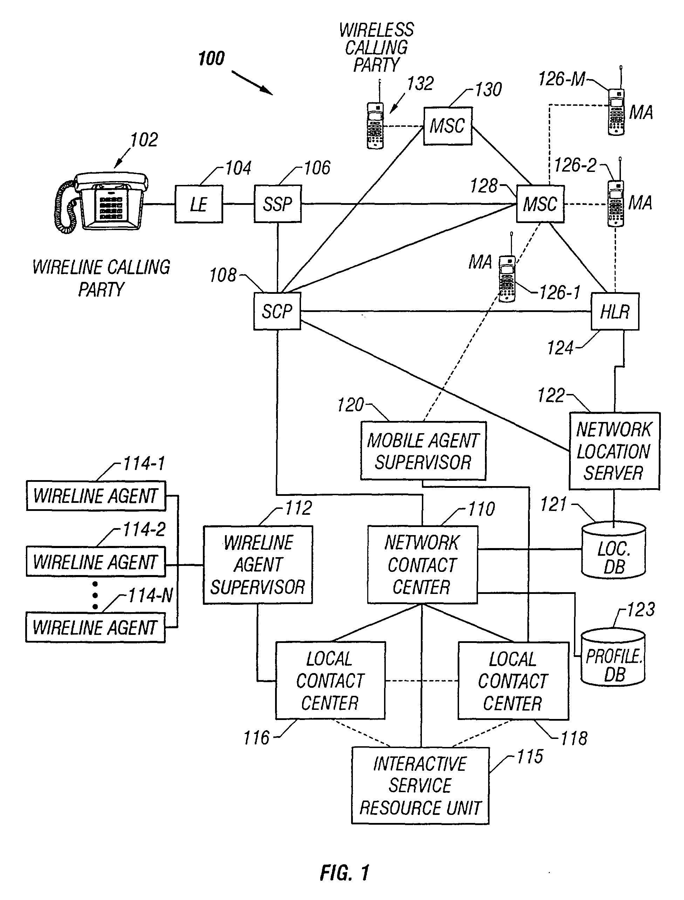

In the drawings, like or similar elements are designated with identical reference numerals throughout the several views thereof, and the various elements depicted are not necessarily drawn to scale. Referring now to FIG. 1, depicted therein is an exemplary hybrid telecommunications network 100 wherein a wireless mobile agent is employed for effectuating an operator-assisted service (or, "operator service") in a contact center environment in accordance with the teachings of the present invention. Those skilled in the art should appreciate upon reference hereto that the hybrid network 100 may be comprised of one or more network portions such as, for example, a wireless network portion, a wireline network portion, a packet-switched network portion (involving, for instance, the Internet), et cetera. In addition, the hybrid network 100 may be embodied as a next-generation network having the capability to transport diverse multimedia, e.g., voice, video, audio, data, graphics, and the like, for seamlessly effectuating various converged services.

A plurality of wireline subscribers, e.g., wireline calling party 102, served by the wireline network portion are operable to originate calls with respect to an operator-assisted service. A local exchange (LE) 104 serving the calling party 102 is conventionally disposed in the hybrid network 100 accordingly. A service switching point (SSP) 106 coupled to LE 104 is operable to query a service control point (SCP) 108 when an incoming call is received at SSP that requires execution of appropriate service logic associated with the SCP. For example, the service logic may relate to an operator service such as an 800-number service, an 888-number service, a 900-number service, or prepaid calling card services, etc. In further exemplary embodiments of the present invention, the operator service may also comprise a network-based corporate virtual private network (VPN) service involving, e.g., a corporate field sales/marketing force, an engineering support team, corporate help desk management service, etc. In still further exemplary embodiments, the operator-assisted service implementations may involve public emergency relief services, disaster announcement services, interactive multimedia response services, and the like.

Reference numeral 130 refers to a mobile switching center (MSC) operable to serve a plurality of wireless subscribers within a wireless network portion of the hybrid telecommunications network 100. Mobile subscriber 132 is exemplary of a wireless calling party served by the MSC 130 that is operable to originate calls with respect to an operator-assisted service. MSC 130 is operable to execute appropriate wireless call state models and can query the SCP 108 when an incoming call is received thereat which requires execution of the service logic associated with the SCP. As discussed above, such service logic may be invoked responsive to a call in connection with the operator services available in the hybrid network 100.

A contact center environment comprising one or more local contact centers, e.g., contact centers 116 and 118, that are associated with a network-level contact center 110 is provided as part of the hybrid telecommunications network 100 for effectuating a particular operator-assisted service in accordance with the teachings of the present invention. The contact centers, which are also sometimes referred to as call centers, are preferably implemented as entities more than simple or sophisticated "automated call distributors" (ACDs). Rather, the exemplary contact centers may be architected as an open hardware/software system having various application programming interfaces (APIs) for facilitating integration with complex service infrastructures, which can comprise proprietary services, third-party developed applications, et cetera. Further, as will be described in greater detail hereinbelow, the contact center architecture is provided with advanced inbound and outbound call management capability for effectuating the termination of operator-service calls to mobile remote agents.

In addition, an interactive service resource (ISR) node 115 may preferably be disposed in the contact center environment of the hybrid telecommunications network 100 for performing a variety of interactions with respect to an operator-service call originated by a subscriber. For example, an IVR unit provided as the service resource node 115 is operable to: (i) analyze the data from the data channel of the telephone trunk protocols; (ii) use ASR techniques; and (iii) query the subscriber to enter information through the keypad of the subscriber's device. Where multimedia capabilities are available, enhanced sessions may be implemented for customer interactions. Based on the above, the ISR can: (i) connect the call to a message repeater with a prerecorded answer to the subscriber inquiry and close the call without any human operator intervention (i.e., screening); (ii) connect the call with a "hold" message, with the option to call back; or (iii) connect the call to the contact center environment whereby a call routing process can operate to determine the appropriate agent to which the call is to be terminated.

Continuing to refer to FIG. 1, one or more agent supervisors responsible for managing the call agents (comprising, for example, wireline agents, wireless agents, or a combination thereof) are associated with the contact center environment of the hybrid network 100. A wireline agent supervisor 112 is exemplary of a supervisor responsible for a plurality of wireline agents 114-1 through 114-N of the contact center environment. Similarly, a plurality of wireless agents (also referred as mobile agents or MAs), reference numerals 126-1 through 126-M, are managed by a mobile agent supervisor 120. It should be appreciated that wireline agents and wireless agents may preferably be provided with any type of access devices, e.g., wireline terminals, wireless phones, network-capable handheld and palm-held devices such as personal digital assistants (PDAs), wireline and wireless Internet phones, laptop and palmtop computers with integrated phone functionality, et cetera.

Wireline and wireless agent supervisors (collectively, mobile agent supervisors) may be comprised of intelligent machines (e.g., AI-based expert systems), human operators, or both. Regardless of the specific implementation, the supervisors are preferably provided with the capability of capturing all facets of agent device activities (i.e., agent screen/terminal activities including agent responses, statistics, and the like) for ensuring quality control. Preferably, when establishing the call, the agent supervisor is kept in the loop (mostly, in one-way connection, i.e., "listen only" mode). In a further embodiment, the supervisors may be selected in a dynamic manner similar to selecting the agents.

As will be described in greater detail hereinbelow, the access devices operated by the mobile agents are provided with the capability of performing registration actions with respect to a suitable entity associated with the wireless portion of the hybrid telecommunications network 100. In a presently preferred exemplary embodiment of the present invention, the access devices operated by the mobile agents are provided as any known or heretofore unknown mobile phones operating in compliance with appropriate mobile telephony standards. Accordingly, a home location register (HLR) 124 disposed in the wireless portion of the hybrid telecommunications network 100 is responsible for maintaining a database for the plurality of mobile agents associated therewith in a home serving area. An MSC 128 disposed in the wireless portion is exemplary of a wireless switching node serving the mobile agents, either as a visited MSC or as a home MSC. A visitor location register (VLR) (not shown) may be provided with the MSC 128 where it is a visited serving node.

A profile database 123 is included for maintaining the agent profile information, which information is used for selecting a particular agent (wireline or wireless) with respect to a specific operator service. The profile information may comprise, for example, agent's language preferences, skill level, scheduling options, etc.

Still continuing to refer to FIG. 1, a location server node 122 may be disposed in the hybrid telecommunications network 100 for facilitating location-based services for IP network portions, non-IP network portions, or hybrid network portions. A location database 121 operable to maintain current location information of wireless agents, wireline agents, or both, is preferably interfaced with the location server 122, the contact center 110, or both. It should be appreciated that the location database 121 may also be provided as an entity integrated within, for example, the contact center environment. As will be seen hereinbelow, the operator services terminating to a mobile agent in accordance with the teachings of the present invention may involve a location-based service, e.g., dispatch/delivery services such as taxicabs, roadside assistance services, disaster relief services, insurance providers, and the like.

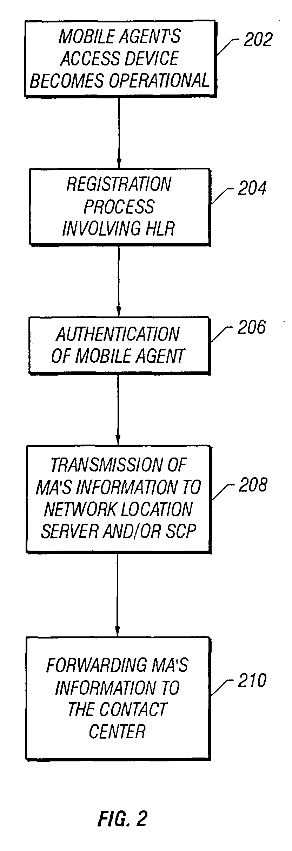

In accordance with the teachings of the present invention, when a mobile agent registers its access device, the messaging scheme involved therein is suitably modified to include the mobile agent's information so that a network node involved in effectuating an operator service (e.g., the SCP, one or more location servers, etc.) is aware of its current location, and so on. That is, when the mobile agent registers, the location, device used, capabilities, and the like is known to the network and this information is stored against the mobile agent in appropriate databases. FIG. 2 is a flow chart of the various steps of an exemplary registration process involving a mobile agent (MA) and its supervisory contact center. When the mobile agent's access device becomes operational (step 202), a registration and authentication procedure involving the MA's HLR is undertaken (step 204). In an exemplary embodiment, an authentication center (AC) disposed in the wireless portion of the hybrid network 100 may be called upon to authenticate the MA (step 206). The MA's information (e.g., location, device/transaction capabilities, and the like) is then transmitted to a node such as an SCP or a location server (step 208). If the location information is sent to SCP, it still needs to update the location database. Thus, in one exemplary embodiment, the node is operable to forward the MA's location information to the contact center's database with which the MA is associated (step 210).

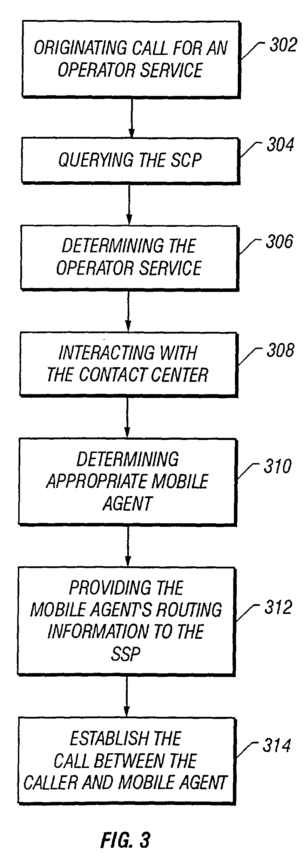

FIG. 3 is a flow chart of the various steps involved in an exemplary service provisioning method using a wireless mobile agent for effectuating an operator-assisted service in the hybrid telecommunications network 100 shown in FIG. 1. Upon receiving an incoming call, whether originated by a wireless or a wireline calling party (step 302), the service switching node (e.g., a wireline LE in the wireline network portion or a serving MSC in the wireless network portion) is operable to query the SCP based for appropriate call-routing information (step 304). By executing appropriate service logic, the SCP determines that the incoming call is an operator service (step 306) and interacts with a contact center associated therewith (step 308). As pointed out above, the contact center environment is operable to determine whether a mobile agent is appropriate for fielding the incoming call. If a mobile agent is required, the contact center identifies a suitable mobile agent based on a plurality of determinations. Mobile agent profile, location information, and optionally, information gathered from the calling party (or stored against the calling party and supplied by the SCP) may be utilized by the contact center in selecting a mobile agent. These operations are consolidated as step 310 in the flow chart depicted in FIG. 3.

Further, although not specifically shown, an intelligent peripheral such as an ISR unit may also be involved in the initial determinations so as to screen the incoming call via menu-driven selections entered via calling party's device and/or interactive voice/video responses. Upon ultimately determining the requirement of a mobile agent, the identification of a suitable mobile agent by the contact center's service logic is made preferably based upon one or more criteria such as, e.g., mobile agent's proximity to the calling party's location, stored profile information relating to the mobile agent (i.e., mobile agent's language preferences and capabilities, scheduling options and restrictions, media preferences and capabilities, skill levels associated with service items of the operator-assisted service, availability, et cetera).

In some other exemplary embodiments, a network-based location server may also be involved in determining the appropriate mobile agent, which is operable to manage and track the location of mobile agents associated with the contact center. Thus, the availability of location information can enable the operator service to be managed as a corporate internal service offering or as an external offering (e.g., third-party service providers).

Continuing to refer to FIG. 3, the contact center is operable to forward an appropriate message to the SCP indicating that the incoming call is to be routed to the mobile agent identified by the contact center. Responsive thereto, the SCP provides the mobile agent's routing information to the service switching node (step 312), which establishes the connection between the calling party and the mobile agent (step 314).

Those skilled in the art should readily appreciate upon having reference hereto that the scheme set forth above advantageously couples the call information (available at the SCP) with the agent information, including location (available at the contact center) to select the most appropriate mobile agent in call distribution application.

Several advantages should be apparent. First, the SSP interface remains the same; the SCP contacts the CC and provides routing information to the SSP. Accordingly, no software change is required at the SSP. In other words, whether part of the service is executed at the SCP or in the contact center environment is transparent to the SSP. Further, since the SCP is in the loop, it is possible to transfer to a different agent in the middle of a call. Service logic can be set up at the CC to monitor for the need to change an agent due to change in location (either of the calling party, of the MA, or both). Enhanced features such as transferring to a different agent (with or without consultation), consulting with a second agent, or more than one agent, etc. can now be implemented as part of an intelligent operator service. Such enhancements are particularly useful where both the calling party and MA are traveling, or where the initially selected MA cannot handle the language, or where the MA cannot handle the customer situation for whatever reason, etc.

Several exemplary service scenarios may be employed in accordance with the teachings of the present invention. For instance, various operator services such as 800/888-number services, 900-number services, calling card and corporate VPN services, etc. can supplement their offerings with network-based mobile agents to receive the calls.
With respect to emergency/rescue services, calls can be terminated to the closest mobile agent based on the proximity of the originating caller. Also, in the case of some emergencies, all those in a proximity area can be notified of the event. It should be recognized that because the calls are routed over the wireless network portion, security can be provided over and above what is currently available with the present emergency police, fire, and ambulance radio bands.

With respect to corporations having mobile work forces, wireless knowledge-based workers can be advantageously deployed for providing optimum efficiency. For example, insurance companies can deploy agents in an emergency area caused by a natural disaster (hurricanes, earthquakes, tornados, floods, etc.) who can be contacted through 800-number help lines directly. Further, since supervisors are provided with location of the field agents, dispatch of additional agents for help and support becomes highly efficient. Large service industry providers, e.g., a hardware retail chain, can offer incoming caller specialty support services and not have the specialists at each store. For instance, experts on electrical appliances can remotely log in via their access devices and field any questions relating to the electrical merchandise offered through the chain. Other service examples include roadside assistance services, sales/engineering support of corporations, mail carrier services, services requiring special language assistance in visited locations, and so on.

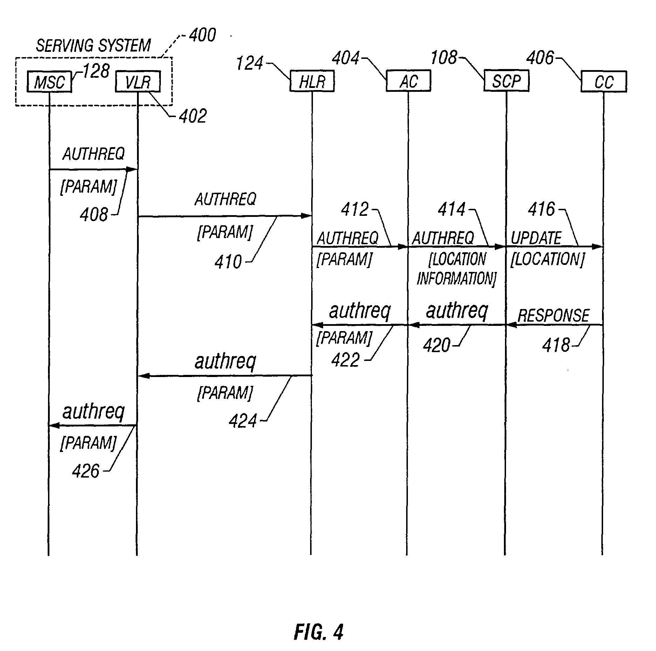

FIGS. 4-6 depict three exemplary message flow diagrams for implementing some of the aspects of the present invention. Referring in particular to FIG. 4, shown therein is an authentication procedure for authenticating a mobile agent and forwarding the mobile agent's information to an SCP (e.g., SCP 108) and a contact center (e.g., CC 406). A visited serving system 400 comprised of MSC 128 and VLR 402 is operable to serve the mobile agent (not shown) in its serving area. When the mobile agent initiates the authentication process, a suitable wireless telephony message 408, e.g., AUTHREQ, is transmitted from MSC 128 to VLR 402. Appropriate parametric information including, for instance, the mobile agent's location information, terminal ID number and capabilities, and the like, is packaged in the message 408. In response, VLR 402 propagates the AUTHREQ message upstream to HLR 124 and AC 404. Reference numerals 410 and 412 exemplify the inter-nodal messaging involved. It should, however, be apparent to one skilled in the art that the HLR and AC entities may be co-located as a single node in the network. Regardless of the specific implementation, the HLR/AC entity is provided with a structure operable to transmit the mobile agent's information to SCP 108 via a message 414. Further, the SCP 108 is also provided with a structure to forward or update the location information to CC 406 via a message 416.
Where a location server is also involved (not shown in this FIG.), a similar message may be propagated thereto in order to provide or update the mobile agent's location information. Also, where the CC maintains the location server database, the location update information may be sent directly to CC 406 without involving the SCP.

Thereafter, a downstream messaging process is undertaken by the entities involved for transmitting appropriate results and/or responses. Accordingly, CC 406 generates a response 418 to SCP 108. In turn, appropriate authreq messages are transmitted back to the serving system 400. Reference numerals 420, 422, 424 and 426 are exemplary of such authreq responses having appropriate results as parametric information.

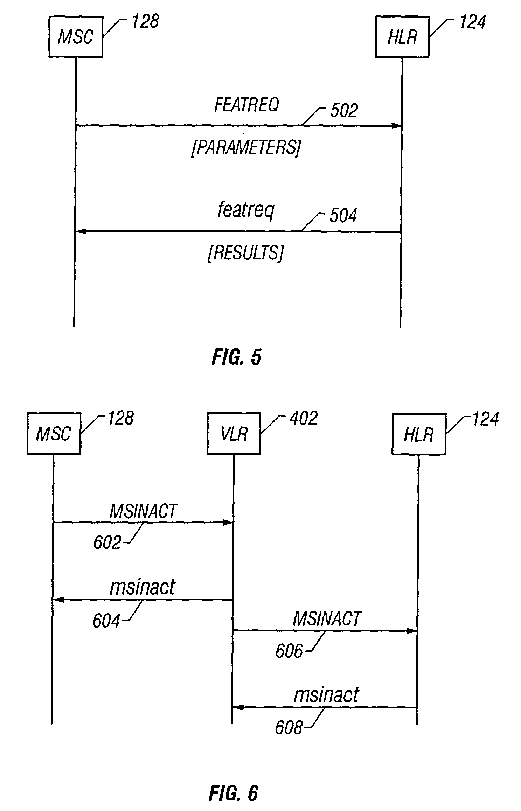

FIG. 5 depicts an exemplary message flow diagram for effectuating a feature-related treatment procedure on behalf of a registered/authenticated mobile agent. In a direct feature request operation, the messaging flow takes place between the serving MSC and the HLR only, without the involvement of the VLR. As shown in the illustrative scenario, for example, a FEATREQ message 502 is transmitted by the MSC 128 to the HLR 124. A featreq response 504 having appropriate results is generated by the HLR 124, which is transmitted back to the serving MSC 128.

FIG. 6 depicts an exemplary message flow diagram for effectuating a procedure wherein an inactive status indication is transmitted to the HLR 124 on behalf of a registered/authenticated mobile agent. This status indication is then forwarded to the CC such that when an operator service call is to be fielded, the inactive mobile agent will not considered for routing. An MSINACT message 602 is transmitted by the serving MSC 128 to its VLR 402. Appropriate parametric information such as location area, mobile agent's ID, terminal ID, etc. is included in the message 602. The serving VLR 402 sends an empty msinact response to the serving MSC 128. Also, it sends an MSINACT message 604 to the HLR 124, which responds by transmitting an empty msinact response 608. The SCP node is subsequently notified of the inactive status of the mobile agent.

In addition to going "offline" or becoming inactive, it should be appreciated that a mobile agent may become unavailable for a number of reasons. For example, the agent may be currently busy with one call or with post-call processing actions (e.g., billing paperwork). Or, the mobile agent is currently occupied with another call and therefore does not want to receive operator service calls for a predetermined period of time. A feature request procedure may be utilized in such scenarios for alerting the HLR and ultimately the contact center in order to update the records so that the service logic can take appropriate action.

Based upon the foregoing Detailed Description, it should be readily apparent that the present invention advantageously provides a system and method wherein operator-assisted services can be effectuated in a contact center environment by using wireless agents, wireline agents, or both. By combining the wireless network's capability to route calls with the location management capability as set forth herein enables the contact center environment to deploy untethered knowledge-based workers in a highly efficient manner. Accordingly, a wider customer base comprised of diverse and widely distributed groups can be economically reached by optimizing the mobile agents' locations, skills, and other profiles.

It is believed that the operation and construction of the present invention will be apparent from the foregoing Detailed Description. Although the present invention has been described in detail herein with reference to the illustrative embodiments, it should be understood that the description is by way of example only and is not to be construed in a limiting sense. It is to be further understood, therefore, that numerous changes in the details of the embodiments of this invention and additional embodiments of this invention will be apparent to, and may be made by, persons of ordinary skill in the art having reference to this description. It is contemplated that all such changes and additional embodiments are within the scope of this invention as defined in the following claims.

## Claims

1. A service provisioning method for use in a hybrid telecommunications network, comprising the steps:
registering by a mobile agent at a home location register (HLR) associated therewith, wherein said mobile agent is operable in conjunction with a contact center for effectuating an operator-assisted service; providing information relating to said mobile agent to a service control point (SCP) disposed in said hybrid telecommunications network;
informing said contact center by said SCP of said mobile agent's location;
when an incoming call is received in a service switching node disposed in said hybrid telecommunications network, querying said SCP for call-routing information;
interacting by said SCP with said contact center upon determining that said incoming call involves said operator-assisted service;
determining by said contact center that said incoming call is to be routed to said mobile agent disposed in said hybrid telecommunications network;
responsive to said determination by said contact center, forwarding a message indicative of said determination to said SCP by said contact center; forwarding call-routing information pertaining to said mobile agent by said SCP to said service switching node; and
responsive to said call-routing information, routing said incoming call by said service switching node to said mobile agent disposed in said hybrid telecommunications network.

2. The service provisioning method as set forth in claim 1, further comprising the step of screening said incoming call by an intelligent peripheral.

3. The service provisioning method as set forth in claim 1, further comprising the step of screening said incoming call by an interactive voice response (IVR) system.

4. The service provisioning method as set forth in claim 1, wherein said incoming call is originated by a wireline subscriber.

5. The service provisioning method as set forth in claim 1, wherein said incoming call is originated by a wireless subscriber.

6. The service provisioning method as set forth in claim 1, wherein said step of determining by said contact center to route said incoming call to said mobile agent is based on location information pertaining to said mobile agent.

7. The service provisioning method as set forth in claim 1, wherein said step of determining by said contact center to route said incoming call to said mobile agent is based on location information pertaining to said incoming call.

8. The service provisioning method as set forth in claim 1, wherein said step of determining by said contact center to route said incoming call to said mobile agent is based on profile information pertaining to said mobile agent.

9. The service provisioning method as set forth in claim 8, wherein said profile information comprises said mobile agent's language preferences.

10. The service provisioning method as set forth in claim 8, wherein said profile information comprises said mobile agent's scheduling options.

11. The service provisioning method as set forth in claim 8, wherein said profile information comprises said mobile agent's media preferences.

12. The service provisioning method as set forth in claim 8, wherein said profile information comprises said mobile agent's skill levels associated with an item related to said operator-assisted service.

13. The service provisioning method as set forth in claim 1, wherein said step of determining by said contact center to route said incoming call to said mobile agent is based on whether said mobile agent is occupied with another call.

14. The service provisioning method as set forth in claim 1, wherein said step of determining by said contact center to route said incoming call to said mobile agent is based on whether said mobile agent is occupied with a post-call processing action relating to another call.

15. The service provisioning method as set forth in claim 1, wherein said call-routing information includes information associated with a mobile switching center (MSC) operating to serve said mobile agent.

16. The service provisioning method as set forth in claim 1, wherein said operator-assisted service comprises an 800-number service.

17. The service provisioning method as set forth in claim 1, wherein said operator-assisted service comprises an 888-number service.

18. The service provisioning method as set forth in claim 1, wherein said operator-assisted service comprises a 900-number service.

19. The service provisioning method as set forth in claim 1, wherein said operator-assisted service comprises a calling card service.

20. The service provisioning method as set forth in claim 1, wherein said operator-assisted service comprises a corporate virtual private network (VPN) service.

21. The service provisioning method as set forth in claim 1, wherein said operator-assisted service comprises a public emergency relief service.

22. A system for effectuating an operator-assisted service in a hybrid telecommunications network, comprising:
means associated with a home location register (HLR) disposed in said hybrid telecommunications network for forwarding a mobile agent's information to a service control point (SCP) when said mobile agent registers at said HLR;
means associated with said SCP for providing said mobile agent's information to a contact center responsible for said operator-assisted service;
a service switching node disposed in said hybrid telecommunications network, said service switching node operating to query said SCP for call-routing information when an incoming call pursuant to said operator-assisted service is received thereat;
means associated with said SCP for interacting with said contact center responsive to said service switching node's query;
means associated with said contact center for determining an appropriate mobile agent to which said incoming call is to be routed; and
means associated with said SCP, operating responsive to a message from said contact center, to forward call-routing information related to said mobile agent to said service switching node, wherein said incoming call is routed to said mobile agent based on said call-routing information received from said SCP.

23. The system for effectuating an operator-assisted service as set forth in claim 22, further comprising means for screening said incoming call prior to routing it to said mobile agent.

24. The system for effectuating an operator-assisted service as set forth in claim 22, wherein said incoming call is originated by a wireless subscriber.

25. The system for effectuating an operator-assisted service as set forth in claim 22, wherein said incoming call is originated by a wireline subscriber.

26. The system for effectuating an operator-assisted service as set forth in claim 22, wherein said means associated with said contact center for determining an appropriate mobile agent to which said incoming call is to be routed is operable responsive to location information pertaining to said mobile agent.

27. The system for effectuating an operator-assisted service as set forth in claim 22, wherein said means associated with said contact center for determining an appropriate mobile agent to which said incoming call is to be routed is operable responsive to location information pertaining to said incoming call.

28. The system for effectuating an operator-assisted service as set forth in claim 22, wherein said means associated with said contact center for determining an appropriate mobile agent to which said incoming call is to be routed is operable in conjunction with a profile record corresponding to said mobile agent.

29. The system for effectuating an operator-assisted service as set forth in claim 28, wherein said profile record includes said mobile agent's language preferences.

30. The system for effectuating an operator-assisted service as set forth in claim 28, wherein said profile record includes said mobile agent's scheduling preferences.

31. The system for effectuating an operator-assisted service as set forth in claim 28, wherein said profile record includes said mobile agent's media preferences.

32. The system for effectuating an operator-assisted service as set forth in claim 28, wherein said profile record includes said mobile agent's skill levels associated with an item corresponding to said operator-assisted service.

33. A computer-accessible medium operable to carry a sequence of instructions which, when executed by at least one processing entity associated with a hybrid telecommunications network, cause the following steps to be performed:
upon receiving a mobile agent's registration information at a home location register (HLR) associated with said mobile agent, forwarding said mobile agent's information to a service control point (SCP) disposed in said hybrid telecommunications network, wherein said mobile agent is operable in conjunction with a contact center for effectuating an operator-assisted service;
informing said contact center by said SCP of said mobile agent's location;
when an incoming call is received in a service switching node disposed in said hybrid telecommunications network, querying said SCP for call-routing information;
interacting by said SCP with said contact center upon determining that said incoming call involves said operator-assisted service;
determining by said contact center that said incoming call is to be routed to said mobile agent disposed in hybrid telecommunications network;
responsive to said determination by said contact center, forwarding a message indicative of said determination to said SCP by said contact center; forwarding call-routing information pertaining to said mobile agent by said SCP to said service switching node; and
responsive to said call-routing information, routing said incoming call by said service switching node to said mobile agent disposed in said hybrid telecommunications network.

34. The computer-accessible medium as set forth in claim 33, further comprising another sequence of instructions operable to carry out the step of screening said incoming call by an intelligent peripheral.

35. The computer-accessible medium as set forth in claim 33, further comprising another sequence of instructions operable to carry out the step of screening said incoming call by an interactive voice response (IVR) system.

36. The computer-accessible medium as set forth in claim 33, further comprising another sequence of instructions operable to carry out the following steps:
determining that said operator-based service involves a location-based service; and
querying, by at least one of said contact center and said SCP, a location sever node disposed in said hybrid telecommunications network.

37. The computer-accessible medium as set forth in claim 33, wherein said incoming call is originated by a wireline subscriber.

38. The computer-accessible medium as set forth in claim 33, wherein said incoming call is originated by a wireless subscriber.

39. The computer-accessible medium as set forth in claim 33, wherein said step of determining by said contact center to route said incoming call to said mobile agent is based on location information pertaining to said mobile agent.

40. The computer-accessible medium as set forth in claim 33, wherein said step of determining by said contact center to route said incoming call to said mobile agent is based on location information pertaining to said incoming call.

41. The computer-accessible medium as set forth in claim 33, wherein said step of determining by said contact center to route said incoming call to said mobile agent is based on profile information pertaining to said mobile agent.

42. The computer-accessible medium as set forth in claim 41, wherein said profile information comprises at least one of said mobile agent's language preferences, scheduling options, media preferences, skill levels associated with an item corresponding to said operator-assisted service.

43. The computer-accessible medium as set forth in claim 33, wherein said step of determining by said contact center to route said incoming call to said mobile agent is based on whether said mobile agent is available.

44. The computer-accessible medium as set forth in claim 33, wherein said step of determining by said contact center to route said incoming call to said mobile agent is based on whether said mobile agent is occupied with a post-call processing action relating to another call.

45. The computer-accessible medium as set forth in claim 33, wherein said call-routing information includes information associated with a mobile switching center (MSC) operating to serve said mobile agent.

46. The computer-accessible medium as set forth in claim 33, wherein said operator-assisted service comprises an 800-number service.

47. The computer-accessible medium as set forth in claim 33, wherein said operator-assisted service comprises an 888-number service.

48. The computer-accessible medium as set forth in claim 33, wherein said operator-assisted service comprises a 900-number service.

49. The computer-accessible medium as set forth in claim 33, wherein said operator-assisted service comprises a calling card service.

50. The computer-accessible medium as set forth in claim 33, wherein said operator-assisted service comprises a corporate virtual private network (VPN) service.

51. The computer-accessible medium as set forth in claim 33, wherein said operator-assisted service comprises a public emergency relief service.
